# EUROPEAN PATENT SPECIFICATION

(11) **EP 3 245 410 B1**
(45) Date of publication and mention of the grant of the patent: **28.11.2018**
(21) Application number: 15808856.7
(22) Date of filing: 03.12.2015
(51) Int. Cl.: F16B 2/24

(54) **AIRBAG CLIP**
AIRBAG-KLAMMER
ATTACHE DE COUSSIN DE SÉCURITÉ GONFLABLE

(30) Priority: 16.01.2015 ES 201500044
(43) Date of publication of application: 22.11.2017
(73) Proprietor: Illinois Tool Works Inc., Glenview, IL 60025 (US)
(72) Inventor: MARTIN MARINO, Ivan, E-08921 Santa Coloma de Gramanet (Barcelona) (ES); ORTEGA DONA, Raul, E-08760 Martorell (Barcelona) (ES)
(74) Representative: Herrero & Asociados, S.L.
(86) International application number: PCT/US2015/063737
(87) International publication number: WO 2016/114856

(56) References cited:
- WO-A1-2012/104250
- WO-A1-2012/150004

## Description

This invention relates to an airbag clip of the type used in the motor industry for the attachment of airbag devices, especially in the case of side-impact or curtain type airbags, with the special feature that various improvements have been made in their construction which among other advantages make it possible to increase the strength of the clip with regard to the extraction forces brought about through activation of the airbag mechanism.

### PRIOR ART

Airbags are safety devices that are increasingly being used in the motor industry and which in combination with other safety components such as seatbelts help to reduce fatal accidents in the case of collisions. Airbags are deployed in a fraction of a second, giving rise to an enormous snatch force on their attachment components which suffer the consequences of that impact. As a result of this the tedious work for operators to restore airbags to working order once they have been used is well known in the industry.

This task comprises dismantling all the attachments of the airbag, replacing the airbag and installing a new one, and again fitting all its attachments.

This is the reason why despite the fact that the supporting elements for airbags described in this invention are mere attachment devices in the form of clips supporting elements on panels, the enormous stresses which they have to withstand has given rise to specific highly developed configurations to ensure that there is no damage to the panel and that airbags can be installed conveniently and easily.

The applicant for this invention is also the proprietor of patents EP 2 356 342 B1, EP 2 404 067 B1 and WO 2012/129233 A1 which relate to some elements of the said type of airbag clips, improving their efficiency, and which with variations are widely used in the industry. This content is also used in the clips according to this invention as prior art. What is indisputable is that use of the said clips has demonstrated that despite their advantages they can still be improved, for example through the improvements included in this invention. Patent DE 102010013612 A1 relates to an airbag clip in circular form which is constructed in the opposite way to the above patents. Starting from one end of the same, the furthest point from insertion of the clip in the panel opening, it is formed a cylindrical box with two halves, with the two parts of the half-box nested together, from which the interior and exterior attachment elements to the panel extend. The inconvenience of this arrangement is that its inverted arrangement makes it easy for the clip to be released through the compression forces which tend to crush the clip and open it, separating its two halves.

Patent WO2012104250 A1 relates to an airbag clip which is also along the lines of the preceding patents, starting from a base in the outer part of the clip, which is the part that is not inserted into the panel opening, the said base giving rise to a box formed as two facing half-boxes through the extension of descending tangs, the said half-boxes having windows through which there emerge the limbs provided at the ends of the descending tangs, forming a loop which on projecting through the said window form the surfaces engaging the inner surface of the panel. These surfaces, which are those engaging the internal surface of the panel, have to withstand the forces extracting the clip when the airbag is activated, have supporting side walls and an inclined profile which engages the edge of the abovementioned window, providing support. The outer part of the clip is markedly tall and lacks suitable flexibility, being quite rigid. The shape of the descending tangs and their loops, essentially forming semicircular segments, do not allow the forces to be adequately distributed through the part. When faced with the large extraction forces due to activation of the airbag, these forces do not tend to hold the clip together, because of the nature of the clip's construction, but destroy it, separating its parts, which are unable to exert their full strength.

WO2012150004 A1 discloses a fastening clip for mounting a component, in particular an airbag or an airbag module, on a carrier, said fastening clip comprising a top section, a clip body and retaining elements which project laterally from the clip body and can be deflected resiliently.

This type of clip can be improved, mainly with regard to its working performance, through increasing the strength of the extraction forces which the clip can withstand when the airbag is activated and the distribution and direction of the forces acting on it.

This and other advantages of this invention will be more apparent in the course of the description which follows below.

### BRIEF DESCRIPTION OF THE INVENTION

This invention relates to improvements in airbag clips, the clips attaching airbag devices used in the motor industry, especially in side-impact or curtain airbags. These improvements comprise a general strengthening of the structure of the clip, preventing the clip from being released when it receives the forces due to the use of the airbag, as a result of its geometry, and preventing its structures from offering all their efficiency and performance.

The clip forms a box through the union two half surfaces which have locking means at their joining extremities in the form of both tabs and elements enclosing these tabs. This is the case for protuberances on these tabs which engage openings present on the surface of the box.

The descending limbs of the clip are inclined towards the center of the clip, have a terminal loop which gives rise to the portion of the descending limbs forming the surfaces engaging the inner surface of the panel. These loops are in strong contact, one against the other, acting against forces which both compress the clip and extract it. The force of the surface of the clip engaging the inner surface of the panel in which it is installed is strengthened by lateral tabs in the window of the box which offer support for these limbs against forces extracting the clip.

The limbs of the clip have strengthening protuberances and enlarged areas or enlarged surfaces, acting both against the internal surface of the panel and against the part of the limb which can be supported against the edges of the clip's box.

The clip has flexible tangs outside the surface of the supporting panel which have the special feature that opposite pairs engage each other due to the existence of openings in one of the said tangs which the other crosses.

These flexible tangs are attached to the box of the clip through flexible connections by means of folds which provide reserve resilience.

It should be borne in mind that the clip according to the invention is constructed from the same flat metal piece, its three-dimensional shape being achieved through folding and punching. The clip is of metal, of heat-treated steel, imparting high strength to the part and incorporating sufficient resilience to respond to its working stresses. All the envisaged aims have been accomplished in this way, providing an improved airbag clip which offers high performance in use and which especially remains intact when the airbag is triggered.

### BRIEF DESCRIPTION OF THE DRAWINGS

For a better understanding of the invention this description is accompanied by a set of drawings provided purely by way of illustration and not limiting the invention.
Figure 1 is a perspective view of a preferred embodiment of a clip incorporating the improvements according to this invention.
Figure 2 is a front view of the clip in the preceding figure, showing the side on which the surfaces forming the box or central body of the clip nest together.
Figure 3 is a perspective view of a transverse cross-section of the clip, showing details of its interior part.
Figure 4 is another transverse cross-section of the clip, at right-angles to the above, which displays the inner part of the front view in Figure 2.
Figure 5 is a magnified detail of the embodiment in Figure 1, showing a lateral tab supporting the engaging surfaces of the ascending side limbs of the clip according to the invention more clearly.

### DETAILED EXPLANATION OF THE INVENTION

This invention comprises an improved airbag clip of the type of clips which are used for the attachment of airbags, for example side-impact or curtain airbags, of the type formed by a body from which extend flexible elements bearing against the surface of the said clip which enters the attachment panel, as well as descending tangs which give rise to different structures for the said clip, such as side limbs having surfaces bearing against the inner surface of the said attachment panel in such a way that the said supporting surfaces and those provided by the said flexible supporting elements engage the said attachment panel on both sides, in the form of a sandwich, enabling the clip to be supported on the said panel.

Clip (1) is in fact formed with a single folded and punched laminar surface forming its three-dimensional body. This is a metal clip made of carbon steel which has been heat treated to impart improved strength qualities to it.

Clips for airbags such as those according to this invention are inserted into an opening made in the surface. This surface effectively divides the clip into an upper outer part which is not inserted into the said opening and an inner lower part which is inserted into the opening. The upper part of the clip corresponds to the outer part and the lower part of the clip corresponds to the inner part. Likewise the ascending direction is from the inner part to the outer (lower → upper) and the descending part is from the outer part to the inner (upper → lower). A box (2) is formed by the union of two surfaces (3) which are approximately "U"-shaped in transverse cross-section, being attached by one of their ends, the said attachment being strengthened by tabs produced by division of the portions of the connecting part forming opposite surfaces (10). As may be seen from the attached figures, tabs (10) which are located within box (2) have nails (11) which are shaped to engage in the openings provide in box (2).

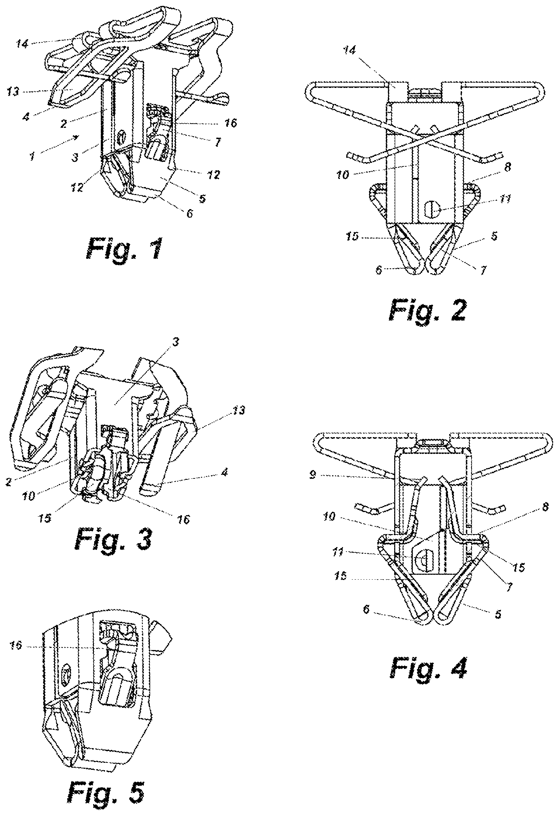

The aim of this construction, giving the box greater substance, is to consolidate it, to prevent it from coming apart, by making this difficult. As was mentioned during citation of the prior art one of the known problems in the known technique is that this type of box may not fully perform its function, which is to withstand strong forces compressing it, as a result of which its structure was previously slightly weakened, losing its strength qualities and assisting its collapse. In the same front interior view of the piece Figure 4 shows the previously described engagement between nail (11) provided on inner tab (10) which passes through the opening in the outer surface of box (2). Figure 3 is a transverse cross-section through the above, also displaying this attachment.

Limbs (5) with an inclination towards the central axis of the clip extend downwards from this box (2) away from the center of clip (1) to form a loop (6) and in the opposite direction extend as ascending limbs (7). In the preferred construction of the invention and as illustrated in the drawings, loops (6) of each limb (5) are in contact. This mutual contact is a strong contact of one against the other.

This descending limb (5) has an enlarged surface (12), almost in the form of a triangle, which allows its base to extend beyond the walls forming box (2). This obviously prevents box (2) from "descending" under pressure and passing beyond those stops represented by said enlarged surface (12).

For their part ascending limbs (7) are configured to emerge from the inner part of box (2) towards the exterior of the same, through a hollow space, opening or window made in its surface (3), creating a surface (8) which is approximately parallel to the supporting panel and is configured to engage the same, in the known manner as previously described for the said type of clips.

The function of this surface (8) is optimized, it in fact being larger than the surface of ascending limb (7) in order to offer greater contact surface between the clip and the lower surface of the supporting panel.

The sides of this window have tabs (16) which provide a support for said surfaces (8) of box (2) against the inner surface of the panel in response to forces which tend to extract clip (1).

Ascending limbs (7) have a continuation towards the upper part of the clip through folding through an angle of more than 90° forming an upper convergence, not necessarily with contact, with the respective limb on the other side of the clip. This construction enables said clip (1) to be undipped for removal, because the extremities of the said ascending limbs are configured as tabs (9) which make it possible to withdraw surfaces (8) from the edges of the panel opening, by pressing them at the center of the clip, making it possible for clip (1) to be extracted. The working assembly of said limbs (5 and 7) is optimized to offer improved structural strength, incorporating strengthening protuberances (15) on their surfaces for this purpose. At this point special attention should be paid to the specific geometry of the limbs (5 and 7) and how they work in resisting the stresses that clip (1) has to withstand, mainly forces in an ascending and/or descending direction. The design of these limbs brings about a dynamic of forces in which the stresses experienced by clip (1) require the involvement of all its elements, which in this way make a positive contribution to increasing its efficiency. When for example surfaces (8) of ascending limbs (7) are compressed against the inner surface of the supporting panel, they work against that stress both through the strong contact between loops (6), and descending limbs (5) and their reinforcements (15) in tension against the edges of the windows in said box (2) and tabs (16); the increased strength of said box (2) helps it to withstand the stress mentioned which it receives. Enlarged surface (12) of said descending limbs (5) making a stop against box (2) prevents limbs (5) from collapsing.

Similarly the elements of clip (1) which are characteristic of this invention are configured to offer the clip improved structural strength against forces compressing it. As will be seen in the figures accompanying this invention, the upper part of said box (2), in the direction of its position in relation to the opening in the supporting panel, is attached to two pairs of flexible tangs (4) which cross, two on each side. One of said tangs (4) has an opening (13) which enables the other opposite tang to engage with it, passing through that opening. These tangs (4) are attached to box (2) through a resilient fold (14).

As will be seen from this construction, it provides appropriate strength and flexibility for the part against the forces compressing clip (1). The crossing between tangs (4) provides lateral support, preventing the tangs from becoming misaligned. This effect, avoiding mutual misalignment of tangs (4), is achieved through openings (13) and engagement of the opposite tang in that opening.

The number, the height and the flexed shape of said tangs (4) with a resilient zigzag structure ensures that the device behaves well against compression stresses imposed upon it.

The clip according to the invention may undergo treatment to prevent corrosion and/or receive a suitable coating in order to improve its service life and wear in relation to dust, moisture and other elements which might attack the clip.

It will be understood that in this case many details of finish and shape are possible without altering the essence of the invention.

## Claims

1. An AIRBAG CLIP of the type of clips which are used for the attachment of airbags, for example side-impact or curtain airbags, of the type formed by a body from which extend flexible elements providing support against the outer surface of the said clip which enters an attachment panel, also with descending tangs and side limbs offering surfaces which press against the inner surface of the said attachment panel in such a way that the said pressure surfaces and the contact surfaces provided by the said flexible supporting elements engage the said attachment panel on both its sides, in the form of a sandwich, enabling the clip to be supported on the said panel, the airbag clip being formed from a single folded and punched laminar surface forming the three-dimensional body of the said airbag clip (1), **characterized in that** the said pressure surfaces (8) of the said ascending lateral limbs (7) against the inner surface of the said attachment surface have a support in lateral tabs (16) in the part where said ascending lateral limbs (7) pass, increasing its performance against forces extracting the clip,
and **in that** it includes a box (2) formed by the junction of two surfaces (3) which are approximately "U"-shaped in transverse cross-section, attached through two of their extremities, this junction between the said two surfaces (3) being reinforced by tabs (10) produced by division of the joining parts forming opposite surfaces located on the inner part of said box (2); the walls of said box (2) having openings in which nails (11) provided on said tabs (10), in which they engage through contact, forming the junction.

2. The AIRBAG CLIP as claimed in the preceding claim, **characterized in that** the said surfaces (3) have a lower extension into limbs (5), the said limbs (5) having an inclination towards the axis of the clip to form a loop (6) and in the opposite direction extending as the said ascending limbs (7).

3. The AIRBAG CLIP as claimed in the preceding claim, **characterized in that** the said loops (6) of each descending limb (5) converge together forming a strong contact one against the other.

4. The AIRBAG CLIP as claimed in the preceding claim, **characterized in that** the said descending limb (5) has an enlarged surface (12) extending beyond the walls of the said box (2).

5. The AIRBAG CLIP as claimed in any of claims 1 to 4, **characterized in that** the said ascending limbs (7) project outside the said box (2) through openings or windows in said surface (3) and include the said pressure surface (8) which is approximately parallel to the surface of the supporting panel.

6. The AIRBAG CLIP as claimed in any of the preceding claims, **characterized in that** the said pressure surfaces (8) are enlarged and are larger than the said descending limbs (7).

7. The AIRBAG CLIP as claimed in any of the preceding claims, **characterized in that** the said ascending limbs (7) are prolonged through folding through an angle of more than 90° into an upper convergence with the respective limb on the other side of the clip, offering tabs (9) for disengaging the said clip (1) from the edges of the panel opening.

8. The AIRBAG CLIP as claimed in any one of the preceding claims, **characterized in that** the said ascending limbs (7) have reinforcing protuberances (15).

9. The AIRBAG CLIP as claimed in any one of the preceding claims, **characterized in that** it has two pairs of the said flexible tangs (4), the two of which on each side cross each other, one of them having an opening (13) which engages the other tang which passes through it.

10. The AIRBAG CLIP as claimed in the preceding claim, **characterized in that** the said upper extremity of the said box (2) and the said flexible tangs (4) are connected by a resilient fold (14).

11. The AIRBAG CLIP as claimed in any one of the preceding claims, **characterized in that** it is made of heat-treated carbon steel.

12. The AIRBAG CLIP as claimed in any one of the preceding claims, **characterized in that** it has received treatment against corrosion and/or a coating.

## Patentansprüche

1. AIRBAGCLIP der Art von Clips, die zum Befestigen von Airbags verwendet werden, beispielsweise von Seitenaufprall- oder Vorhangairbags, der Art, die durch einen Körper gebildet werden, von dem sich flexible Elemente erstrecken, die eine Unterstützung gegen die Außenfläche des Clips bereitstellen, der in eine Befestigungstafel eingreift, außerdem mit abwärtsgerichteten Zungen und Seitengliedern, die Oberflächen bereitstellen, die in einer Weise gegen die Innenflächen der Befestigungstafel drücken, dass die Druckflächen und die Kontaktflächen, die durch die flexiblen Trägerelemente bereitgestellt werden, an beiden Seiten mit der Befestigungstafel in der Form eines Sandwichs interagieren und es ermöglichen, dass der Clip auf der Tafel abgestützt wird, wobei der Airbagclip aus einer einzigen gefalteten und gestanzten laminaren Oberfläche gebildet wird, die den dreidimensionalen Körper des Airbagclips (1) bildet, **dadurch gekennzeichnet, dass** die Druckflächen (8) der aufsteigenden lateralen Glieder (7) gegen die Innenfläche der Befestigungsfläche eine Unterstützung in lateralen Laschen (16) in dem Abschnitt aufweisen, durch den die steigenden lateralen Glieder (7) verlaufen, was seine Leistung gegen Kräfte, die den Clip herausziehen, verbessert,
und dadurch, dass er einen Kasten (2) umfasst, der durch die Verbindung von zwei Flächen (3) gebildet wird, die im Querschnitt ungefähr "U"-förmig sind, die durch zwei ihrer Extremitäten befestigt sind, wobei diese Verbindung zwischen den beiden Flächen (3) durch Laschen (10) verstärkt wird, die durch die Teilung der Verbindungsteile, die gegenüberliegende Flächen bilden, die sich an dem Innenteil des Kastens (2) befinden, erzeugt werden; wobei die Wände des Kastens (2) Öffnungen aufweisen, in denen Nägel (11) an den Laschen (10) bereitgestellt sind, mit denen sie durch Kontakt interagieren und die Verbindung bilden.

2. AIRBAGCLIP nach dem vorhergehenden Anspruch, **dadurch gekennzeichnet, dass** die Oberflächen (3) eine tiefere Erstreckung in die Glieder (5) aufweisen, die Glieder (5) eine Neigung zu einer Achse des Clips hin aufweisen, um eine Schlaufe (6) zu bilden, und sich in die Gegenrichtung der aufsteigenden Glieder (7) erstrecken.

3. AIRBAGCLIP nach dem vorhergehenden Anspruch, **dadurch gekennzeichnet, dass** die Schlaufen (6) jedes absteigenden Glieds (5) zusammenlaufen, um einen starken Kontakt gegeneinander zu bilden.

4. AIRBAGCLIP nach dem vorhergehenden Anspruch, **dadurch gekennzeichnet, dass** das absteigende Glied (5) eine vergrößerte Oberfläche (12) aufweist, die sich über die Wände des Kastens (2) hinaus erstreckt.

5. AIRBAGCLIP nach einem der Ansprüche 1 bis 4, **dadurch gekennzeichnet, dass** die aufsteigenden Glieder (7) aus dem Kasten (2) durch Öffnungen oder Fenster in der Oberfläche (3) hervorspringen und die Druckfläche (8) einschließen, die etwa parallel zu der Oberfläche einer Unterstützungstafel verläuft.

6. AIRBAGCLIP nach einem der vorhergehenden Ansprüche, **dadurch gekennzeichnet, dass** die Druckflächen (8) vergrößert sind und größer sind als die absteigenden Glieder (7).

7. AIRBAGCLIP nach einem der vorhergehenden Ansprüche, **dadurch gekennzeichnet, dass** die aufsteigenden Glieder (7) durch Falten um einen Winkel von mehr als 90° in eine obere Kontaktstelle mit dem jeweiligen Glied auf der anderen Seite des Clips verlängert sind, wodurch Laschen (9) zum Trennen des Clips (1) von den Kanten der Tafelöffnung bereitgestellt werden.

8. AIRBAGCLIP nach einem der vorhergehenden Ansprüche, **dadurch gekennzeichnet, dass** die aufsteigenden Glieder (7) Verstärkungsvorsprünge (15) aufweisen.

9. AIRBAGCLIP nach einem der vorhergehenden Ansprüche, **dadurch gekennzeichnet, dass** er zwei Paar der flexiblen Zungen aufweist (4), wobei sich die beiden auf jeder Seite überkreuzen, wobei eine davon eine Öffnung (13) aufweist, die mit der anderen Zunge interagiert, die durch sie hindurch verläuft.

10. AIRBAGCLIP nach dem vorhergehenden Anspruch, **dadurch gekennzeichnet, dass** die obere Extremität des Kastens (2) und die flexiblen Zungen (4) durch eine widerstandsfähige Falte (14) verbunden sind.

11. AIRBAGCLIP nach einem der vorhergehenden Ansprüche, **dadurch gekennzeichnet, dass** er aus hitzebehandeltem Kohlestahl hergestellt ist.

12. AIRBAGCLIP nach einem der vorhergehenden Ansprüche, **dadurch gekennzeichnet, dass** er gegen Korrosion und/oder mit einer Beschichtung behandelt wurde.

## Revendications

1. Attache de coussin de sécurité gonflable du type des attaches qui sont utilisées pour la fixation de coussins de sécurité gonflables, par exemple des airbags latéraux ou des airbags rideaux, du type formé par un corps à partir duquel s'étendent des éléments souples qui fournissent un support contre la surface extérieure de ladite attache qui entre dans un panneau de fixation, également avec des soies descendantes et des branches latérales qui offrent des surfaces qui pressent contre la surface intérieure dudit panneau de fixation de telle manière que lesdites surfaces de pression et les surfaces de contact fournies par lesdits éléments de support souples engagent ledit panneau de fixation sur ses deux côtés, sous la forme d'un sandwich, permettant que l'attache soit supportée sur ledit panneau, l'attache de coussin de sécurité gonflable étant formée à partir d'une seule surface laminaire pliée et poinçonnée qui forme le corps tridimensionnel de ladite attache de coussin de sécurité gonflable (1), **caractérisée en ce que** lesdites surfaces de pression (8) desdites branches latérales ascendantes (7) contre la surface intérieure de ladite surface de fixation présentent un support dans des languettes latérales (16) dans la partie où lesdites branches latérales ascendantes (7) passent, augmentant sa performance contre des forces d'extraction de l'attache, et **en ce qu'**il comprend un boîtier (2) formé par la jonction de deux surfaces (3) qui sont approximativement en forme de "U" en section transversale, attachées par l'intermédiaire de deux de leurs extrémités, cette jonction entre lesdites deux surfaces (3) étant renforcée par des languettes (10) formées par la division des parties de jonction formant des surfaces opposées (10) situées sur la partie intérieure dudit boîtier (2); les parois dudit boîtier (2) comportant des ouvertures dans lesquelles des clous (11) prévus sur lesdites languettes (10), dans lesquelles ils s'engagent avec contact, forment la jonction.

2. Attache de coussin de sécurité gonflable selon la revendication précédente, **caractérisée en ce que** lesdites surfaces (3) présentent une extension inférieure dans les branches (5), lesdites branches (5) présentant une inclinaison en direction de l'axe de l'attache afin de former une boucle (6), et dans la direction opposée s'étendant comme lesdites branches ascendantes (7).

3. Attache de coussin de sécurité gonflable selon la revendication précédente, **caractérisée en ce que** lesdites boucles (6) de chaque branche descendante (5) convergent ensemble pour établir un contact solide l'une contre l'autre.

4. Attache de coussin de sécurité gonflable selon la revendication précédente, **caractérisée en ce que** ladite branche descendante (5) présente une surface agrandie (12) qui s'étend au-delà des parois dudit boîtier (2).

5. Attache de coussin de sécurité gonflable selon l'une quelconque des revendications 1 à 4, **caractérisée en ce que** lesdites branches ascendantes (7) font saillie à l'extérieur dudit boîtier (2) à travers des ouvertures ou des fenêtres dans ladite surface (3) et comprennent ladite surface de pression (8) qui est approximativement parallèle à la surface du panneau de support.

6. Attache de coussin de sécurité gonflable selon l'une quelconque des revendications précédentes, **caractérisée en ce que** lesdites surfaces de pression (8) sont agrandies et sont plus grandes que lesdites branches descendantes (7).

7. Attache de coussin de sécurité gonflable selon l'une quelconque des revendications précédentes, **caractérisée en ce que** lesdites branches ascendantes (7) sont prolongées avec un pliage affichant un angle supérieur à 90° dans une convergence supérieure avec la branche respective de l'autre côté de l'attache, formant des languettes (9) pour désengager ladite attache (1) des bords de l'ouverture de panneau.

8. Attache de coussin de sécurité gonflable selon l'une quelconque des revendications précédentes, **caractérisée en ce que** lesdites branches ascendantes (7) présentent des protubérances de renforcement (15).

9. Attache de coussin de sécurité gonflable selon l'une quelconque des revendications précédentes, **caractérisée en ce qu'**elle présente deux paires desdites soies souples (4), dont les deux de chaque côté se croisent mutuellement, l'une d'entre elles comportant une ouverture (13) qui engage l'autre soie qui passe à travers celle-ci.

10. Attache de coussin de sécurité gonflable selon la revendication précédente, **caractérisée en ce que** ladite extrémité supérieure dudit boîtier (2) et lesdites soies souples (4) sont connectées par un pli élastique (14) .

11. Attache de coussin de sécurité gonflable selon l'une quelconque des revendications précédentes, **caractérisée en ce qu'**elle est constituée d'un acier au carbone traité thermiquement.

12. Attache de coussin de sécurité gonflable selon l'une quelconque des revendications précédentes, **caractérisée en ce qu'**elle a reçu un traitement contre la corrosion et/ou un revêtement.
